# EUROPEAN PATENT SPECIFICATION

(11) **EP 0 464 657 B1**
(45) Date of publication and mention of the grant of the patent: **22.03.1995**
(21) Application number: 91110622.7
(22) Date of filing: 27.06.1991
(51) Int. Cl.: B24B 5/36, B24B 49/16

(54) **Tread buffing apparatus**
Vorrichtung zum Polieren von Laufflächen
Dispositif de polissage de chapes

(30) Priority: 06.07.1990 US 550265
(43) Date of publication of application: 08.01.1992
(73) Proprietor: THE GOODYEAR TIRE & RUBBER COMPANY, Akron, Ohio 44316-0001 (US)
(72) Inventor: Majerus, Norbert, Akron, OH 44333 (US); Magee, Arthur Webster, Akron, Ohio 44333 (US); Hickman, Michael Dale, Alliance, OH 44601 (US); Parrish, Gary Charles, Uniontown, OH 44685 (US); Rooney, Timothy Michael, Munroe Falls, OH 44262 (US); Chlebina, Lawrence Edward, Akron, OH 44333 (US)
(74) Representative: Leitz, Paul

(56) References cited:
- EP-A- 0 130 759
- FR-A- 1 139 480
- FR-A- 2 271 037
- GB-A- 1 552 841
- US-A- 2 915 113
- US-A- 3 867 792
- US-A- 3 953 942

## Description

### Background of the Invention

This invention relates to an apparatus for buffing a tread to roughen its surface. The inner casing contacting surfaces of the tread are buffed such that the roughened surface provides a means for evacuation of entrapped air when mounted to a prepared tire casing.

In the mounting of replacement treads on a tire casing it is known in the art to buff the surface of the casing, removing the worn tread and roughening the remaining surface. This roughening of the casing improves the adhesion of a cushion layer of unvulcanized rubber which is cemented to the casing. The tread rubber is layered on and cemented to the cushion layer. This assembly is then cured.

It has been determined that a roughening of a casing contacting precured tread surface prior to cementing to the cushion layer improves the tread adhesion. The roughening procedure, commonly called buffing, is accomplished by the use of wire wheels. The wheels remove oxidized rubber and increase the surface area to be bonded, thus improving bonding characteristics. Conventional buffing of the casing and the precured tread were directed circumferentially creating minute grooves around the circumferential surface of the tread and the casing. These grooves provide areas where air can be entrapped. The grooves act as tiny seals and prevent air from being removed during assembly, and entrapped air weakens the bonding of the tread to the casing.

In the past, various means have been utilized to insure that entrapped air is evacuated from between the tread and the cushion layer. The placement of vent cords between the tread and the cushion layer is one example.

With regard to winged treads, trials have shown that circumferentially buffing at the inner curvature of the wing did not produce a uniform buff. Uniformity of buffing being important to bond quality required that an alternative method be developed.

It is the purpose of this invention to provide an apparatus for buffing a precured tread wherein the resulting roughened tread surfaces provides a means for improved air evacuation and an improved bond. This is accomplished by insuring that at least a portion of the roughened grooves terminate at the tread edges, thus providing a means for air evacuation.

It is a further purpose of this invention to describe and illustrate an apparatus for uniformly buffing a precured wing tread whereby the inner surfaces of the wings are uniformly roughened such that the grooves extend to a tread edge.

### Related Art

Hopple, in US-A-3,987,834, issued October 26, 1976, illustrates a Tire Buffing Apparatus and Method. The patent shows the concept of removing the tread rubber from a tire and roughening the casing surface.

Morris, in US-A-4,116,256, issued September 26, 1978, also shows an apparatus for preparing the peripheral surface of a tire casing. The apparatus illustrates the use of a pivotal tire mount such that circumferential buffing of the casing can be accomplished across the tread to the shoulder region of the casing.

Neal, in US-A-4,088,521, issued May 9, 1978, describes a method of retreading a tire with an endless premolded tread wherein the inner surface of the tread is buffed prior to being mounted to the casing.

Bajer, in US-A-4,490,197, issued December 25, 1984, also shows a tire casing buffing apparatus.

Schelkmann, in GB-A-1,552,841, filed October 7, 1976, illustrates a tread molded with a network of passages to assist in the evacuation of gaseous inclusions between the tread internal surfaces and the layer of bonding rubber on the prepared tire carcass. This patent further describes a method of coating the internal surface of the tread with unsaturated rubber to prevent deterioration of the tread internal surfaces during storage.

Blankenship, in US-A-3,925,129, issued December 9, 1975, describes a tire retreading system utilizing a tread strip. The patent emphasizes the importance of removal of trapped air.

FR-A-2 271 037, forming the base of the preamble of claim 1, discloses an apparatus for treating tires having a worn out tread and to provide same with a new premolded tread. The apparatus has two brushes for cleaning and removing rubbery particles from the tire surface and the interior of the new tread.

### Summary of the Invention

An apparatus for buffing a precured tire tread solving the above mentioned problems and avoiding the drawbacks of the prior art is defined in claim 1. Preferred embodiments of the apparatus are described in dependent claims.

### Definitions

The invention also may be better understood in the context of the following definitions, which are applicable to both the specification and the appended claims.

"Axial" is used herein to refer to lines or directions that are parallel to the axis of rotation of the casing or wheel.

"Buffed" means a procedure whereby the surface of an elastomeric tread or casing is roughened. The roughening removes oxidized material and permits better bonding.

"Center plane" means the plane perpendicular to the axis of rotation of the tread and passing through the axial center of the tread.

"Casing" means the casing, belt structure, beads, sidewalls, and all other components of the tire including a layer of unvulcanized rubber to facilitate the assembly of the tread, the tread and undertread being excluded. The casing may be new, unvulcanized rubber or previously vulcanized rubber to be fitted with a new tread.

"Equatorial plane (EP)" means the plane perpendicular to the axis of rotation of the casing or wheel and passing through the center of the crown area of the casing.

"Pneumatic tire" means a laminated mechanical device of generally toroidal shape (usually an open torus) having beads and a tread and made of rubber, chemicals, fabric and steel or other materials. When mounted on the wheel of a motor vehicle, the tire through its tread provides traction and contains the fluid or gaseous matter, usually air, that sustains the vehicle load.

"Replacement tread" as used herein refers to a premolded and precured tread.

"Retreading" means the procedure of refurbishing a tread worn tire by removing the old tread and replacing it with a precured tread or a "hot capped" tread.

"Radial" and "Radially" are used to mean directions radially toward or away from the axis of rotation of the casing or wheel.

"Tread" means a molded rubber component which, when bonded to a tire casing, includes that portion of the tire which comes into contact with the road when the tire is normally inflated and under normal load.

"Wings" means the radial inward extension of the tread located at axial extremes of the tread, the inner surface of the wing being an extension of the tread edge.

### Brief Description of the Drawings

Fig 1 illustrates the annular tread with the inner surfaces buffed.

Fig 2 is a partial cross sectional view of the buffed annular tread.

Fig 3 illustrates a view of the tread buffed surfaces depicting the direction of surface roughening.

Fig 4 illustrates the tread mounted on the buffing apparatus.

Fig 5 is an end view of the tread mounted on the buffing apparatus.

Fig 6 is a plan view of the buffing apparatus with tread mounted.

Fig 7 is a plan view specifically highlighting the wing buffing wheels, the center tread buffing wheels, and the direction of surface roughening of the tread.

Fig 8 is a cross sectional view of the wing buffing assembly, the tread mounted on the drum and the center buffing wheel and support art, the view taken on lines 8-8 from Fig 5.

Fig 9 is a cross sectional view of the drum assembly and the wing buffing assembly with the axial adjustment capability of each depicted, the view taken on lines 9-9 of Fig 4.

Fig 10 illustrates a plan view of a tread being buffed by a single buffing wheel.

Fig 11 is a side view of a single buffing wheel as shown through line 11 in Fig 10.

Fig 12 illustrates a plan view of a tread being buffed by a pair of oppositely rotating buffing wheels.

Fig 13 illustrates a plan view of a tread being buffed by three buffing wheels, two oppositely rotating tread wing edge buffing wheels and a center tread buffing wheel.

### Detailed Description of the Invention

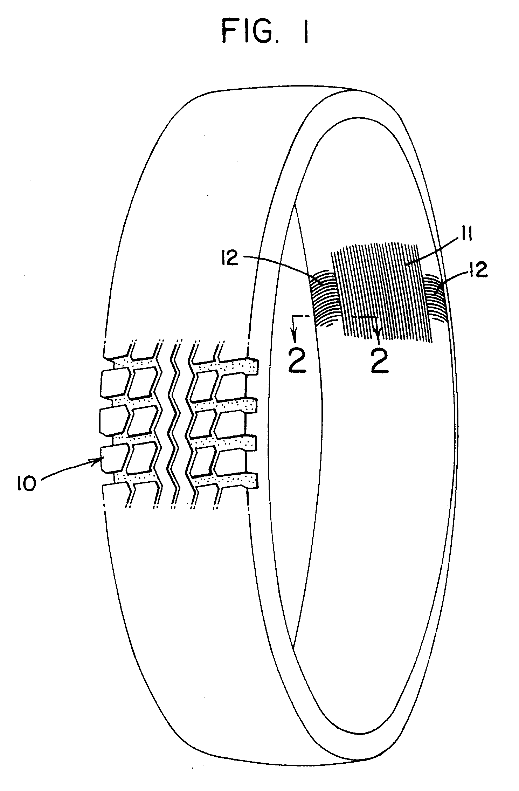

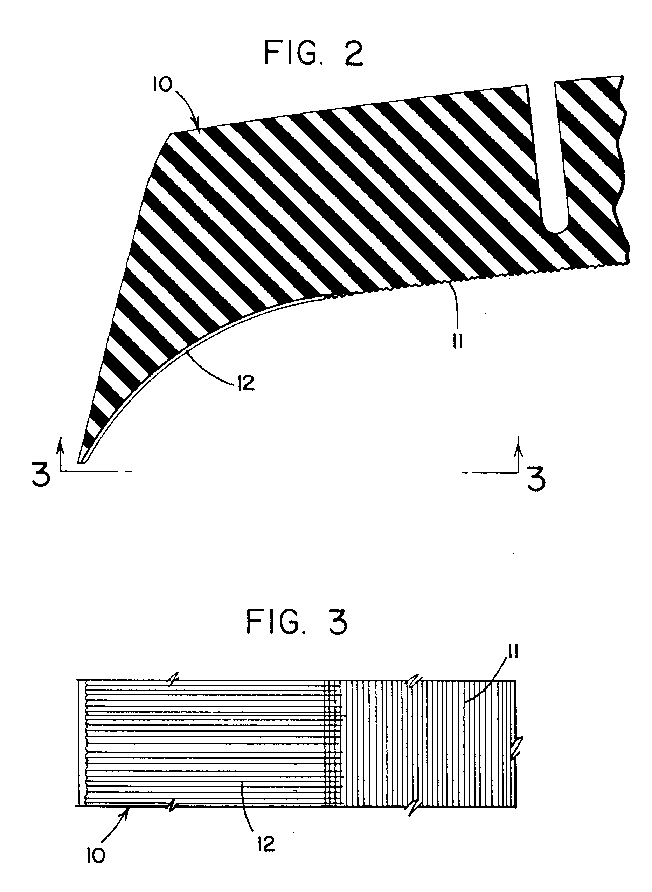

In the drawings, the same numerals are used to designate the same components or items in the several views. With particular reference now to Figs 1-3, an annular buffed tread 10 is illustrated. Fig 2 illustrates a cross sectional view of the buffed tread 10. Fig 3 is a view of the buffed inner tread surface.

Figs 1 through 3 all illustrate a direction of buff whereby the buffing creates circumferential grooves at the center tread inner surface 11 and axial grooves at the wing inner tread surface 12.

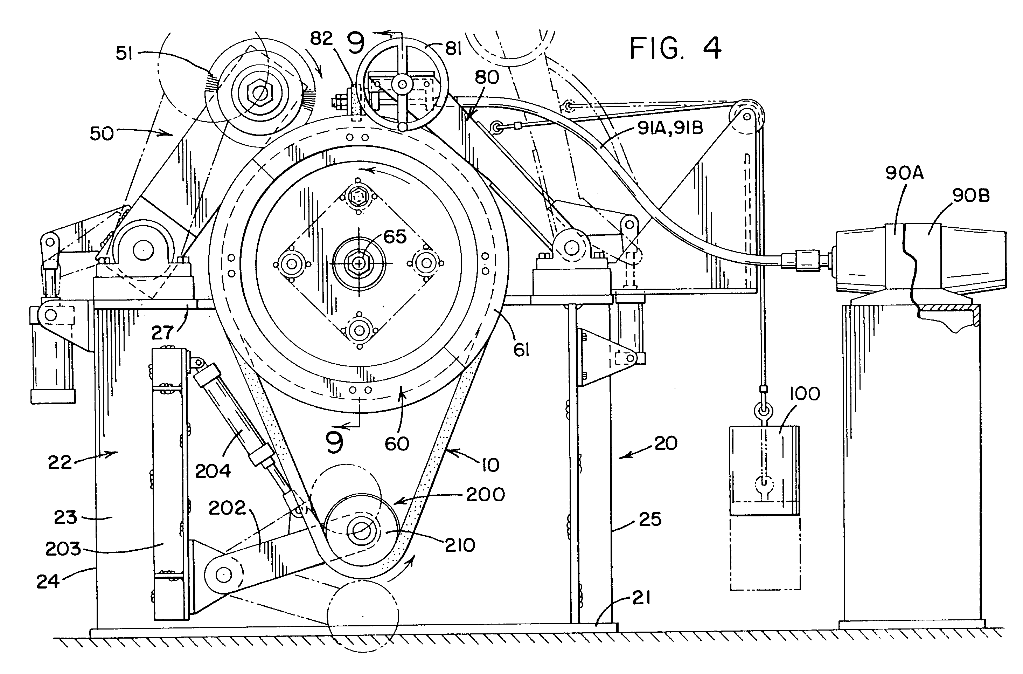

Fig 4 illustrates the tread buffing apparatus which is made up of several subcomponents or elements. These elements are supported by a frame 20. The frame 20 may be constructed of any material with sufficient strength to support the weight and operation of the buffing machine.

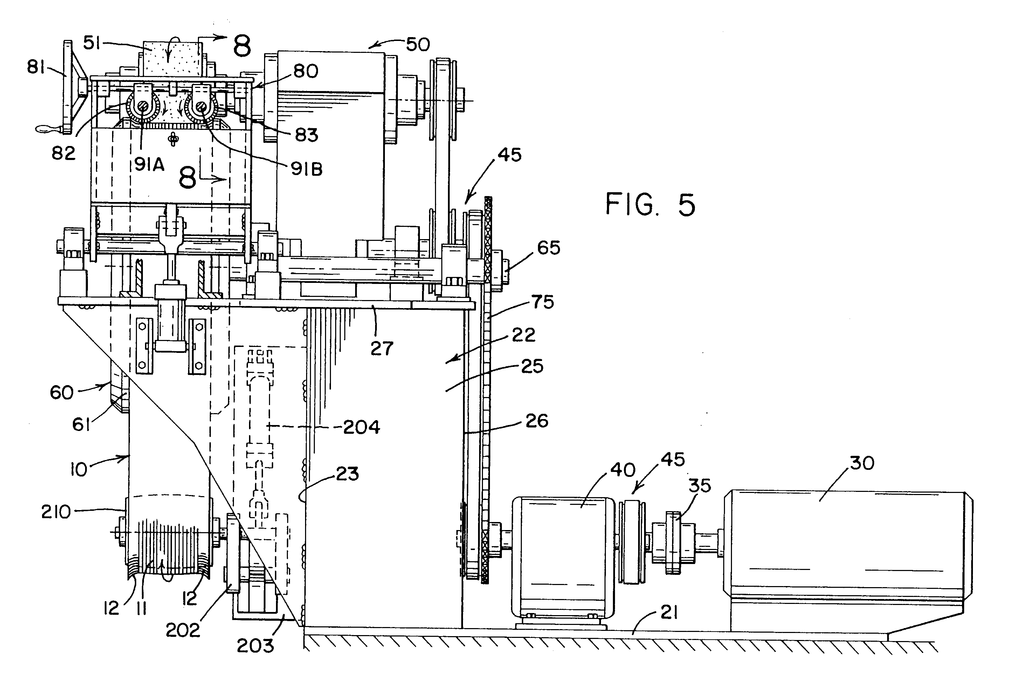

As illustrated in Fig 5, the frame 20 comprises a horizontal base plate 21. A main frame enclosure 22 is mounted to the base plate 21. The enclosure 22 consists of four vertical side members 23,24,25,26, respectively, and a top plate 27 mounted to the enclosure 22 are the various buffer subcomponents or elements. Also fixedly attached to the base plate are the main drive motor 30 and gear reduction box 40. The main drive motor 30 is connected to gear reduction box 40 by a shaft and clutch coupling assembly 35. The gear reduction box 40 is connected to the main enclosure by a series of pulleys and belts 45.

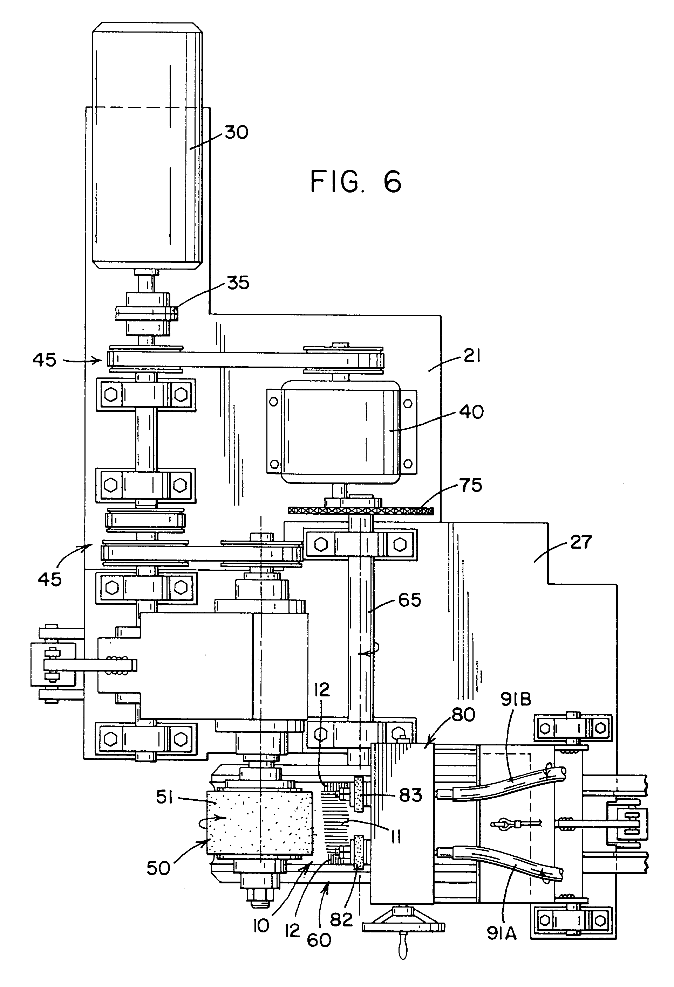

With reference to Fig 6, the main drive motor 30 provides rotational movement for the center tread buffer assembly 50 and tread support drum 60. A rotation speed reduction is accomplished such that the drum 60 rotates at an angular velocity or rpm substantially less than the center tread buffing assembly 50. This rpm ratio is accomplished through the gear box assembly 40 and the belts and pulleys 45 which are connected to the drum shaft 65 by a belt 75. Also pivotally mounted to the enclosure 22 is the wing buffing assembly 80. The wing buffing assembly buffs the inner surface of the tread at the tread edge, the wing inner tread surface 12 being an axial extension of the tread and including the tread edge. The wing buffer assembly is powered by two 5,6 kW (7-1/2 hp.) motors 90A and 90B (shown in Fig 4). The motors are connected to the wing buffer assembly by two flexible drive shafts 91A and 91B. The wing buffer assembly is counterbalanced by weight 100 as can be seen in Fig 4.

With reference to Fig 4, the tread 10 is shown mounted over the tread support drum 60 and a tension roller assembly 200. The tension roller assembly 200 is pivotally attached to the enclosure 22. The tension roller 201 is attached to a tension roller support arm 202. The support arm 202 is attached to a bracket 203 which is welded to the enclosure 22 at side 23. The support arm 202 is pivotally attached to the bracket 203. The tension roller 201 is pivoted by actuating a cylinder 204 which is pivotally fixed to bracket 203 and support arm 202. As the cylinder 204 extends, the tension roller 201 axis of rotation is moved, increasing the distance between the axis of rotation of the drum 60 and the tension roller 201 axis. This relative movement increases the tension on the tread 10.

With reference to Figs 5 and 6, the center tread buffing wheel 51 is rotated in a clockwise rotation while the tread 10 is slowly rotated in a counterclockwise direction. The center tread buffing wheel roughens the inner tread surface creating visually observable circumferential grooves 11. Also depicted is the wing buffing assembly 80. The wing buffing assembly shows two oppositely rotating wing buffing wheels 82 and 83, respectively. These wheels are rotated in opposite directions such that the wings are buffed under a tensile scrubbing action. The wing wheels 82,83 are mounted to a second support arm 80. The wing wheels 82,83 are axially movable and are spaced equidistant from the equatorial plane of the drum 60. The wing wheels 82,83 have an axis of rotation perpendicular to the axis of rotation of the drum 60. The wing wheels 82,83 can be axially moved by turning a wing buffer axial adjustment unit 81.

When buffing a tread, the wing adjustment unit 81 is turned until the wing wheels 82,83 make firm contact with the tread 10. As can be seen in Figs 5 and 6, and as specifically depicted in views 2 and 3 of the tread, the buffing action of the center tread buffing wheel creates circumferential lines 11 along the tread's inner surface, whereas the wing buffing action creates lines that extend outwardly from the centerplane of the tread at the wing inner surfaces to a tread edge. These wing buffing lines create small air passages that assist in the evacuation of trapped air when the tread is mounted to a prepared tire casing. The removal of entrapped air is important if adequate bonding of the tread to the casing is to be accomplished. The present apparatus for buffing a tread provides direct passageways for the removal of entrapped air at the inner surfaces of the wings while also improving the bonding characteristic of the tread by removing oxidized rubber.

Previous buffing apparatuses created only circumferential grooves or lines. These circumferential lines in effect create air traps. Conventional stitching of the tread to the casing while removing most of the air could not remove the air trapped by the buffing lines, and as a result, vent cords were sometimes used as a means to allow air to be removed during curing of the tread to the casing. The present invention minimizes the amount of air entrapped by ensuring that the wing inner surfaces are roughened such as to act as vents enabling the air to escape from under the tread at these areas. Utilizing this apparatus for buffing a tread requires no vent cords. In an alternative embodiment, the entire inner surface of the tread could be buffed such that all the buff lines are perpendicular to the tread centerplane. Such buffing would enable all air to flow radially outward, thus substantially eliminating entrapped air.

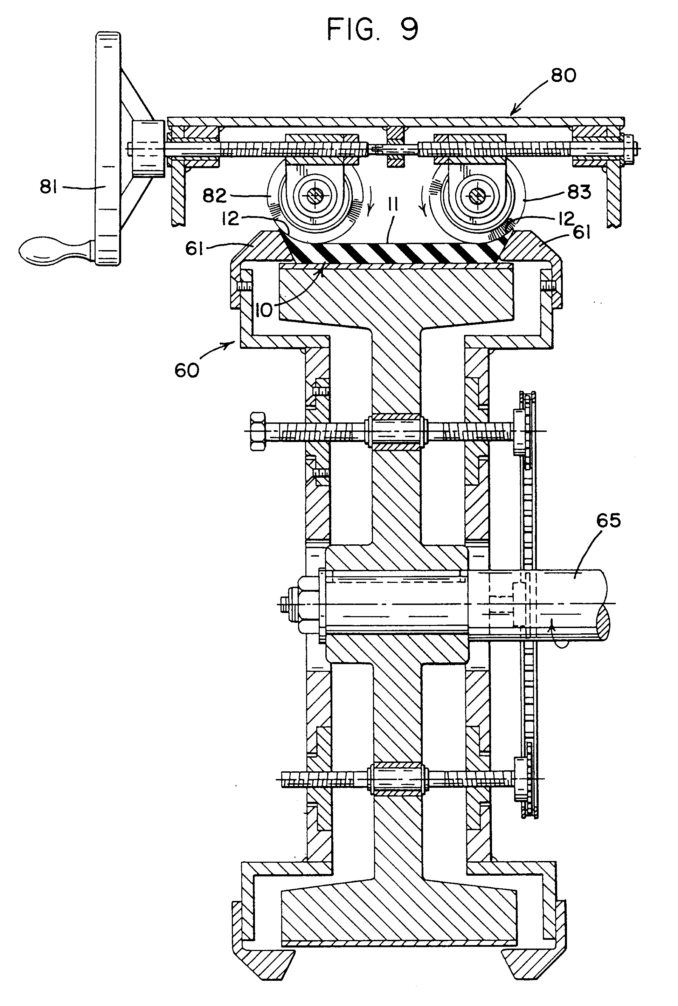

In the illustrated embodiment, as illustrated in Fig 9, the tread is supported by the drum 60. The drum 60 includes wing supports 61 and a means for adjusting the axial spacing of the wing supports 62. The wing supports 61 are axially adjustable such that various tread width sizes can be accommodated. The tread upon being turned inside out such that the ground engaging surface faces radially inwardly and the inner surface is displaced radially outwardly is mounted on the drum 60 and over the tension roller assembly 200. The inner tread surfaces are thus exposed to facilitate the buffing procedure. The tread is supported and centered by the drum 60. The drum wing supports 61 are spaced to accommodate the tread width and provide a rigid support for the flexible tread wing. An alternative embodiment utilizes a conformable pneumatic wheel to support the tread and wings in place of the rigid drum with wing supports. The tread wings are supported such that the rotating wing buffing wheels 82,83 can roughen the wing surfaces 12. The wing supports 61 are designed such that the curvature of the inner surface of the wing is maintained, the curvature of the tread wing being a radius of 2,54 to 5,08 cm (1.0 to 2.0 inches). In the illustrated embodiment, the tread curvature is 1.5 inches. The wing buffing wheels have a radius matching that of the tread wing curvature. In the illustrated embodiment, 7,62 cm (3.0 inch) diameter wire wheels having a 3,81 cm (1.5 inch) radius were used. The selection of a matching radius enable the rotating wing buffing wheels 81,82 to contact the entire wing curvature as the tread rotates on the drum. Complete buffing contact to the tread edge is thus achieved.

The tread when mounted over the drum 60 and the tension roller assembly 200 is placed in tension by actuating a means for moving the tension roller relative to the axis of rotation of the drum. As illustrated in Fig 4, in the illustrated embodiment, the means for moving the tension roller is a pneumatic cylinder 204. The tread is stretched to a predetermined circumferential length, the stretched length being such that the tread when so mounted over a circumferentially curved drum exhibits no cupping. Cupping is defined as an irregular surface caused by thick tread lugs and a thin inner tread. Cupping of the tread causes the buffing wires of the center tread buffing wheel 51 to deflect, or bend over, when the portion of inner tread directly over a lug passes under the buffer. The inner tread between tread lugs is unsupported by the drum, but by stretching the tread over a curved drum, the tread lugs pull the inner tread between the lugs in circumferential tension. This tension causes the unsupported inner tread between lugs to stay in contact with the buffing wires, thus enabling a uniform center tread buff to be achieved. The radius of the drum must be large to reduce the effect of curvature at the tread lugs and to minimize buffing wires from deflecting and bending over in this region. This phenomena causes a non-uniform buff. By placing the tread over a large diameter drum and applying appropriate tension, the problem of cupping is substantially eliminated.

The drum diameter should be as large as possible, preferably a minimum of 50,08 cm (20.0 inches). In the illustrated embodiment, the diameter is 76,2 cm (30.0 inches). The recommended amount of stretch depends on the tread style being buffed. Typically, a tread stretch increasing the circumferential length by 10% is used. In addition to being circumferentially curved, the drum center tread support area may have a slight concave or convex curvature in the axial direction.

To assist in maintaining the tread centered, the tension roller 201 is shaped with a center diameter and two diametrically equal respective end diameters, the center diameter being larger than the end diameters.

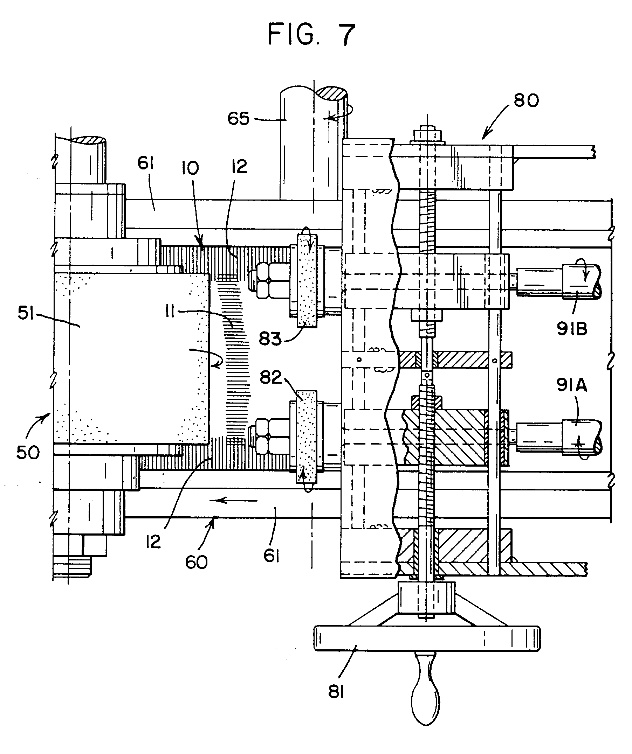

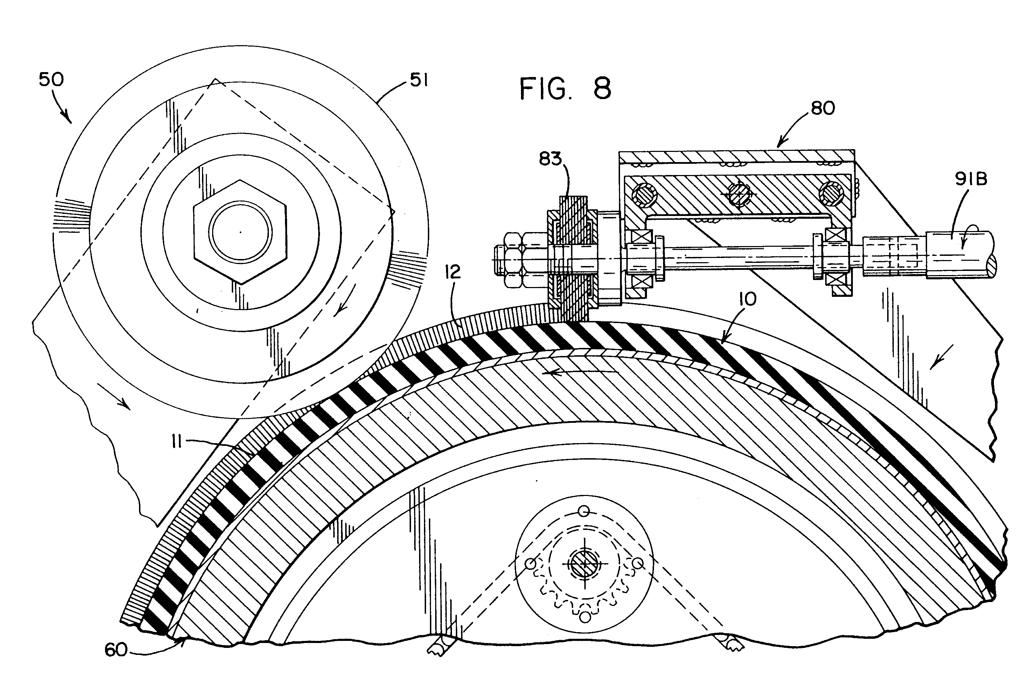

With reference to Figs 7 and 8, a detailed illustration of the tread being buffed is shown, the direction of rotation being clearly exhibited as well as the buff lines on the mounted tread.

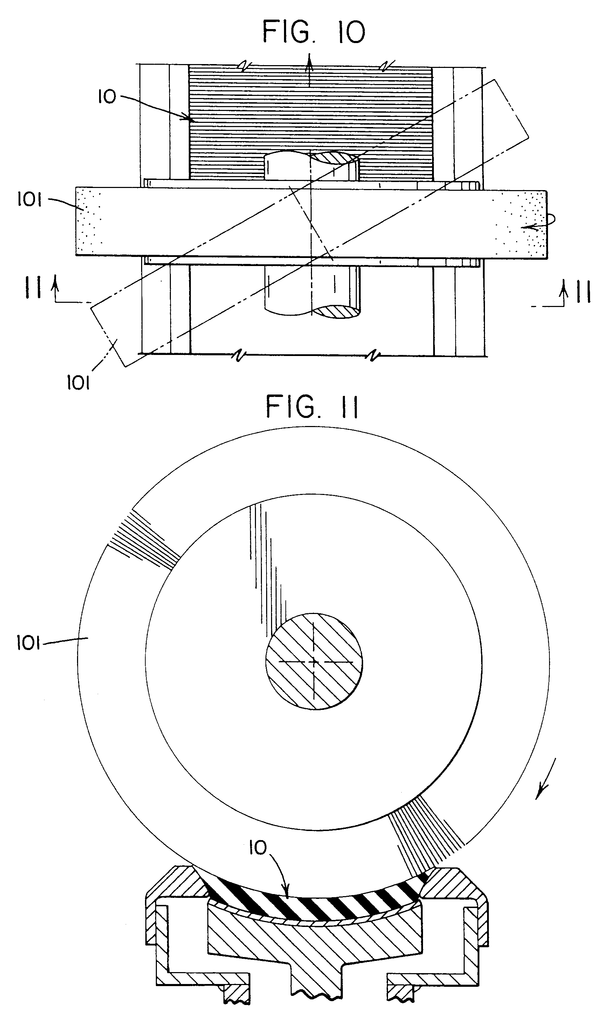

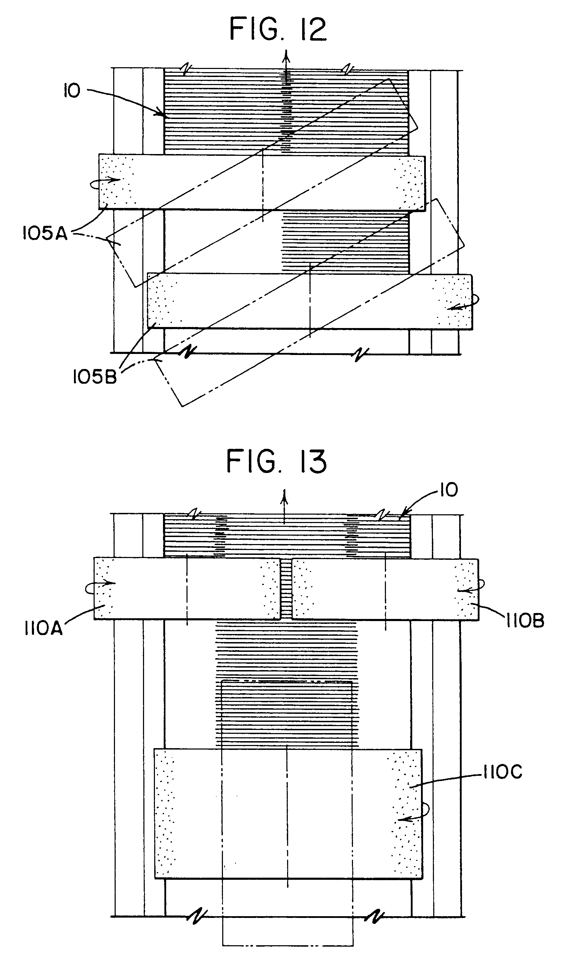

Figs 10 and 11 illustrate a tread 10 being buffed by a single buffing wheel 101, the buffing wheel 101 forming grooves that extend from one tread edge to the opposite tread edge. The illustration depicts the grooves perpendicular to the centerplane of the tread 10 and the tread's direction of travel. In Fig 10 "dashed" or phantom lines depict the wheel 101 angularly displaced such that the grooves would not be perpendicular to the centerplane of the tread but would extend from tread edge to tread edge. This angular displacement of the buffing wheel 101 is considered within the scope of the invention. The wheel 101 could be displaced for 1° off perpendicular to the centerplane of the tread to 179° such that the grooves achieve a fine screw thread configuration to reach a tread edge to tread edge connection, the buffing wheel being sized diametrically to make contact with the inner surfaces of the tread, the diameter being in relationship with the angle and curvature of the buffed surfaces. A range of angular displacement of 15° to 165° is recommended, thus creating a shorter route for the venting of entrapped air. A 90° positioning of the wheel relative to the centerline of the tread provides the ideal, i.e. shortest or least restrictive distance for gases to vent.

Fig 12 illustrates a tread 10 being buffed by two oppositely rotating buffing wheels 105A,105B, each wheel buffing from the centerplane of the tread and extending to a respective tread edge. As in Fig 10, the phantom or "dashed" line depiction of the wheels 105A,105B showing angular positioning of the buffing wheels is possible while maintaining center to tread edge air evacuation via the formed grooves. The pattern or texture of the buffed surface can be as shown in Fig 12 or may be a chevron configuration.

Fig 13 depicts a three buffing wheel method whereby the tread edges are buffed by two oppositely rotating tread edge buffing wheels 110A,110B, and the center of the tread is buffed by a third wheel. The third wheel 110C is depicted forming grooves transverse to the tread's centerplane and overlapping the grooves formed by the wing edge buffing wheels 110A,110B. A phantom line depicts the fact that the third buffer 110C can be positioned in line with the tread direction of rotation. This orientation is similar to the embodiment illustrated in Figs 4 through 9.

The apparatus described herein can be used to buff a precured annular tread in the following manner.

A tread is turned inside out such that the radially inner surfaces of the tread and wings are radially outward, and the ground engaging tread surface is radially inward. The tread is then mounted over an axially rotatable drum and a tension roller mechanism such that the tread and the wings are centered in and supported by the drum. The tension roller is then moved relative to the drum's axis of rotation, thereby putting the mounted tread in tension. In the illustrated embodiment, the tension roller is pivotally supported on a support arm which is mounted to the frame, the support arm being moved by a pneumatic cylinder. The pneumatic cylinder stretches the tread to a predetermined circumferential length, the length being such that the inner surface of the tread can be buffed without exhibiting cupping. The operator then activates a switch starting a main drive motor. The main drive motor is attached to the drum by a series of belts and pulleys, the main drive motor providing counterclockwise rotation of the drum. The drum is rotated to a predetermined buffing speed. The main drive motor is further connected to a center tread buffing wheel by a series of belts and pulleys and provides axial rotation of the center tread buffing wheel at a speed higher than the rotation of the drum, the speed of the drum being set in the range of 10-17 rpm. In the illustrated embodiment, the rotation was set at 15 rpm. The center tread buffer is mounted to a support arm and rotates at approximately 1500 rpm. By actuating pivotal rotation of the support arm, the center tread buffing wheel is pivoted until the buffing wheel is in contact with the inner tread surface, the buffing wheel being rotated in a clockwise motion at approximately 1500 rpm.

The wing buffing wheels are brought up to a predetermined buffing speed, then actuation of pivotal rotation of a second support arm occurs. The second support arm containing the two axially movable rotating buffing wing wheels. The wing wheels are spaced equidistant from the equatorial plane of the drum and have an axis of rotation perpendicular to the axis of rotation of the drum. Each wheel is rotated in the opposite direction relative to the other such that the wings are buffed under a tensile scrubbing action. The wing buffing wheels are pivoted until the wheels come into firm contact with the tread wing surface. The wing buffer axial adjustment unit is turned until the rotating wing wheels make firm contact with the tread wing surfaces. The tread is buffed to a predetermined roughness. In the illustrated method of buffing, the wing buffing wheels are axially spaced prior to buffing such that proper contact with the tread wing surfaces can be made without requiring axial adjustment. Buffing tension is measured by monitoring the motor amperage setting of the main drive motor and of the wing buffing motors. The motor amperage required for proper buffing is in the 30-50 amp range, preferably 40 amps. In the above described method, the center tread buffing wheel contacts the tread 5-15 seconds prior to the wing buffer contacting the tread wing surfaces. In the illustrated method, the center tread buffing wheel contacts the tread 10 seconds prior to the wing buffing wheels contacting the tread wing surfaces. The center tread buffing wheel contacts the tread during buffing for a total period of 40-60 seconds duration, preferably 50 seconds. After the buffing cycle is completed, the buffing wheels are pivotally moved from tread surface contact. The wheel rotation is stopped, and the tension roller mechanism is axially moved toward the drum, thus reducing the tension on the tread. The tread is inspected for proper buff, and upon finding that the tread buffing is appropriate, the tread is removed from the drum and tension roller.

Prior to turning the tread right side out, the operator may apply a bonding cement to the buffed surface of the tread immediately after removing the tread from the buffing apparatus. Preferably, the cement is applied while the tread is stretched on an adhesive application machine. After applying cement to the buffed surface, the cemented surface is covered with a polyethylene liner. The liner protects the cemented surfaces and facilitates storage of the finished treads. The liner is removed just prior to assembly to a prepared casing. The tread is then turned such that the tread surface is radially outward. The tread is then packaged and put into storage until ready to be mounted on a prepared tire casing.

The method described above may be carried out in association with an apparatus comprising an axially rotatable drum adapted for receiving and mounting an annular tread with wings mounted on a frame. The apparatus includes an axially rotatable tension roller mounted to a pivotal support arm. The roller has an axis of rotation parallel to the axis of rotation of the drum. The roller is adapted for receiving the tread and is spaced a distance from the drum. The roller support arm is pivotally movable such that the distance between the drum and the roller can be increased, thereby providing a tensile force on the mounted tread. A means is provided for pivoting the tension roller. A center tread buffing wheel mounted to a pivotally movable buffer support arm and a means for pivoting the buffer support arm relative to the drum are provided. A further means for axially rotating the drum and the center tread buffing wheel includes a rotational reduction ratio means such that the center tread buffing wheel moves at a higher RPM than the drum. A pair of axially rotatable wing buffing wheels are provided. The wing buffing wheels are spaced at a distance approximating the tread wing spacing and positioned such that the axis of rotation of the wing buffing wheels is perpendicular to the axis of rotation of the drum. A pair of drive means rotates the wing buffers such that the rotation is clockwise for one wing buffer and counterclockwise for the other wing buffer. Both wing buffers are rotated such that the wing buffers contact the tread inner wing surfaces and buff perpendicular to and away from the centerplane of the mounted tread. A means for controlling the buffing of the tread is provided such that a relatively constant buffing pressure is applied to the tread surfaces being buffed. The means for controlling includes a means for limiting the time of buffing of the center tread and the wing.

## Claims

1. An apparatus for buffing an annular tread with wings having a frame (20), a means (60) for supporting the tread (10) being axially rotatable and mounted to the frame, a means for stretching (200) the tread (10) being axially rotatable and having an axis of rotation parallel to the axis of rotation of the means (60) for supporting the tread (10), a center tread buffing wheel means (50) having a curved surface capable of being brought into contact with the tread for buffing a casing contacting tread surface with brush marks of substantially even depth, a main drive means (30) for rotating the mounted tread (10) about one or more axis and for rotating the center tread buffing wheel (50), the apparatus characterized by a pair of tread wing edge buffing means (80) for buffing the wings at respective tread edges with brush marks that are of substantially even depth and extend axially outwardly to tread edges, and a means for rotating the tread wing edge buffing means (90A,90B).

2. The apparatus as claimed in claim 1, wherein the means (60) for supporting the tread (10) are an axially adjustable drum, the drum being rotatable about an axis of rotation and being adjustable to accommodate various axial widths of annular treads (10).

3. The apparatus as claimed in claim 2, wherein the means (200) for stretching the tread are an axially rotatable tension roller (201) mounted to a pivotal roller support arm (202) attached to the frame (20), the roller (201) having an axis of rotation parallel to the axis of rotation of the drum (60), the roller (201) being adapted for receiving the tread (10) and being spaced a distance from the drum (60), and the roller support arm (202) being pivotally movable such that the distance between the drum (60) and the roller (201) can be increased, thereby providing a tensile force on the mounted tread (10).

4. The apparatus as claimed in claim 3, wherein the pair of tread wing edge buffing means (80) has a pair of axially rotatable wing buffing wheels (82,83), the wing buffing wheels (82,83) being spaced at a distance approximating the tread wing spacing and positioned such that the axis of rotation of the wing buffing wheels (82,83) is perpendicular to the axis of rotation of the drum (60).

5. The apparatus as claimed in claim 4, wherein the means (90A,90B) for rotating the tread wing edge buffing means (80) has a pair of drive means to rotate the wing buffing wheels (82,83), the means (90A,90B) being such that the rotation of the wing buffing wheels (82,83) is clockwise for one wing buffing wheel and counterclockwise for the other wing buffing wheel, both wing buffing wheels being rotated such that the wing buffing wheels contact the tread inner wing surfaces and buff perpendicular to and away from the centerplane of the mounted tread (10).

6. The apparatus as claimed in claim 3, wherein the tread wing buffing means (80) are mounted to a wing buffer support arm, the support arm being pivotally mounted to the frame and including a means (81) for providing an increase or decrease in axial spacing of the tread wing edge buffing means (80).

7. The apparatus as claimed in claim 1, wherein the main drive means (30) includes a rotational reduction ratio between the drum (60) and the center buffer wheel (51) of about 1/100, wherein the buffer turns at about 1500 rpm, and the drum rotates at about 15 rpm.

8. The apparatus as claimed in claim 7, wherein the wing buffing wheels (80) rotate at about 2000 rpm.

9. The apparatus as claimed in claim 7, wherein a controller means regulates buffing pressure by maintaining a constant amperage from each of the three drive means, the main drive (30) and the two-wing buffer drives (90A,90B), the means for controlling the buffing pressure on the tread (10) being such that a relatively constant buffing pressure is applied to the tread surfaces to be buffed, the means for controlling including a means for limiting the time of buffing of the center tread and the wings.

10. The apparatus as claimed in claim 9, wherein the controller means is set at an amperage of 30 to 50 A per drive motor (30,90A,90B).

11. The apparatus as claimed in claim 10, wherein the controller means is set at an amperage of 40 A per drive motor (30,90A,90B).

12. The apparatus as claimed in claim 9, wherein the controller means has a jack screw, the jack screw being rotatable such that a raising of the jack screw lowers the buffing pressure, and conversely, a lowering of the jack screw raises the buffing pressure, the screw rotation being controlled by the control means.

13. The apparatus as claimed in claim 1, wherein there are means for removing buffed tread material, the means for removing buffed tread material including a vacuum dust particle removing means and associated ducting.

14. The apparatus as claimed in claim 1, wherein the diameter of the drum (60) is at least 51 cm.

15. The apparatus as claimed in claim 14, wherein the diameter of the drum (60) is equal to 76 cm.

16. The apparatus as claimed in claim 3, wherein the roller (200) is shaped with a center diameter into diametrically equal respective end diameters, the center diameter being larger than the end diameters.

17. The apparatus as claimed in claim 4, wherein the wing buffing wheels (82,83) are wire brushes are about 7.5 cm in diameter.

18. The apparatus as claimed in claim 14, wherein the drum (60) at the center tread support area is concavely curved.

19. The apparatus as claimed in claim 14, wherein the drum (60) at the center tread support area is convexly curved.

## Patentansprüche

1. Vorrichtung zum Aufrauhen einer ringförmigen Lauffläche mit Flanken, welche Vorrichtung einen Rahmen (20) ein Mittel (60) zum Tragen der Lauffläche (10), das axial drehbar und auf dem Rahmen montiert ist, ein Mittel (200) zum Dehnen der Lauffläche (10), das axial drehbar ist und eine Rotationsachse besitzt, die parallel zu der Rotationsachse des Mittels (60) zum Tragen der Lauffläche (10) verläuft, eine Aufrauhscheibe (50) für die Laufflächenmitte, die eine gekrümmte Oberfläche hat, die in Berührung mit der Lauffläche gebracht werden kann, um die Oberfläche der Lauffläche, die in Kontakt mit einer Decke steht, mit Bürstenmarkierungen von im wesentlichen gleicher Tiefe aufzurauhen, und ein Hauptantriebsmittel (30) zum Drehen der montierten Lauffläche (10) über eine oder mehrere Achsen und zum Drehen der Aufrauhscheibe (50) für die Laufflächenmitte hat, gekennzeichnet durch, ein Paar Aufrauhmittel (80) für die Flanken der Laufflächenkanten zum Aufrauhen der Flanken an den jeweiligen Laufflächenkanten mit Bürstenmarkierungen, die von im wesentlichen gleicher Tiefe sind und sich axial nach außen zu den Kanten der Lauffläche erstrecken, und ein Mittel (90A, 90B) zum Drehen der Aufrauhmittel für die Flanken der Laufflächenkanten.

2. Vorrichtung nach Anspruch 1, bei welcher das Mittel (60) zum Tragen der Lauffläche (10) eine axial einstellbare Trommel ist, wobei die Trommel um eine Rotationsachse drehbar und einstellbar ist, um unterschiedliche axiale Breiten der ringförmigen Laufflächen (10) aufzunehmen.

3. Vorrichtung nach Anspruch 2, bei welcher das Mittel (200) zum Dehnen der Lauffläche eine axial drehbare Spannwalze (201) ist, die auf einem verschwenkbaren Walzentragarm (202) montiert ist, der an dem Rahmen (20) befestigt ist, wobei die Walze (201) eine parallel zu der Rotationsachse der Trommel (60) verlaufende Rotationsachse hat, und die Walze (201) für die Aufnahme der Lauffläche (10) angepaßt und in einem Abstand von der Trommel (60) angeordnet ist, und der Walzentragarm (202) verschwenkbar ist, so daß der Abstand zwischen der Trommel (60) und der Walze (201) vergrößert werden kann, wodurch eine Spannkraft innerhalb der montierten Lauffläche (10) vorgesehen wird.

4. Vorrichtung nach Anspruch 3, bei welcher das Paar von Aufrauhmitteln (80) für die Flanken der Laufflächenkanten ein Paar von axial drehbaren Aufrauhscheiben (82, 83) hat, wobei die Aufrauhscheiben (82, 83) einen Abstand zueinander aufweisen, der näherungsweise dem Abstand der Flanken der Lauffläche entspricht, und so angeordnet sind, daß die Rotationsachse der Aufrauhscheiben (82, 83) im rechten Winkel zu der Rotationsachse der Trommel (60) verläuft.

5. Vorrichtung nach Anspruch 4, bei welcher das Mittel (90A, 90B) zum Drehen der Aufrauhmittel (80) für die Flanken der Laufflächenkanten ein Paar von Antriebsmitteln zum Drehen der Aufrauhscheiben (82, 83) für die Flanken hat, wobei das Mittel (90A, 90B) so ausgebildet sind, daß die Drehung der Aufrauhscheiben (82, 83) für die Flanken von der einen Aufrauhscheibe für die Flanken im Uhrzeigersinn und von der anderen Aufrauhscheibe für die Flanken entgegen dem Uhrzeigersinn erfolgt, und beide Aufrauhscheiben für die Flanken so gedreht werden daß die Aufrauhscheiben für die Flanken die inneren Oberflächen der Flanken der Lauffläche berühren und im rechten Winkel zu und weg von der Mittelebene der montierten Lauffläche (10) aufrauhen.

6. Vorrichtung nach Anspruch 3, bei welcher das Aufrauhmittel (80) für die Flanken der Lauffläche auf einem Tragarm für das Aufrauhmittel für die Flanken montiert ist, wobei der Tragarm verschwenkbar an dem Rahmen montiert ist und ein Mittel (81) beinhaltet, um eine Vergrößerung oder Verkleinerung des axialen Abstandes der Aufrauhmittel (80) für die Flanken der Laufflächenkanten vorzusehen.

7. Vorrichtung nach Anspruch 1, bei welcher die Hauptantriebsmittel (30) ein Drehzahluntersetzungsverhältnis zwischen der Trommel (60) und der mittigen Aufrauhscheibe (51) von etwa 1/100 beinhaltet, wobei die Aufrauhscheibe mit etwa 1500 Umdrehungen pro Minute dreht und die Trommel mit etwa 15 Umdrehungen pro Minute dreht.

8. Vorrichtung nach Anspruch 7, bei welcher die Aufrauhscheiben (80) für die Flanken mit etwa 2000 Umdrehungen pro Minute drehen.

9. Vorrichtung nach Anspruch 7, bei welcher ein Kontrollmittel den Aufrauhdruck durch Aufrechterhaltung einer konstanten Stromstärke von jedem der drei Antriebsmittel, dem Hauptantrieb (30) und den beiden Antrieben (90A, 90B) für die Aufrauhscheiben der Flanken, reguliert, wobei das Kontrollmittel für den Aufrauhdruck auf der Lauffläche (10) so ausgebildet ist, daß ein relativ konstanter Aufrauhdruck auf die Oberflächen der aufzurauhenden Lauffläche aufgebracht wird, und das Kontrollmittel ein Mittel zur Begrenzung der Zeit zum Aufrauhen der Laufflächenmitte und der Flanken beinhaltet.

10. Vorrichtung nach Anspruch 9, bei welcher das Kontrollmittel auf eine Stromstärke von 30 A bis 50 A für jeden Antriebsmotor (30, 90A, 90B) eingestellt ist.

11. Vorrichtung nach Anspruch 10, bei welcher das Kontrollmittel auf eine Stromstärke von 40 A für jeden Antriebsmotor (30, 90A, 90B) eingestellt ist.

12. Vorrichtung nach Anspruch 9, bei welcher das Kontrollmittel eine Hebeschraube hat, wobei die Hebeschraube drehbar ist, so daß ein Anheben der Hebeschraube den Aufrauhdruck erniedrigt, und, entgegengesetzt, ein Absenken der Hebeschraube den Aufrauhdruck erhöht, wobei die Drehung der Hebeschraube durch das Kontrollmittel geregelt ist.

13. Vorrichtung nach Anspruch 1, bei welcher Mittel zum Entfernen von aufgerauhtem Laufflächenmaterial vorgesehen sind, wobei die Mittel zum Entfernen von aufgerauhtem Laufflächenmaterial ein Vakuummittel zum Entfernen von Staubpartikel und die mit dem Vakuummittel verbundenen Rohleitungen aufweist.

14. Vorrichtung nach Anspruch 1, bei welcher der Durchmesser der Trommel (60) wenigstens 51 cm beträgt.

15. Vorrichtung nach Anspruch 14, bei welcher Durchmesser der Trommel gleich 76 cm ist.

16. Vorrichtung nach Anspruch 3, bei welcher die Walze mit einem mittigen Durchmesser und gegenüberliegenden jeweils gleichen seitlichen Durchmessern ausgebildet ist, wobei der mittige Durchmesser größer als die seitlichen Durchmesser ist.

17. Vorrichtung nach Anspruch 4, bei welcher die Aufrauhscheiben (82, 83) für die Flanken Drahtbürsten mit einem Durchmesser von etwa 7,5 cm sind.

18. Vorrichtung nach Anspruch 14, bei welcher die Trommel (60) in dem Tragbereich für die Laufflächenmitte konkav gekrümmt ist.

19. Vorrichtung nach Anspruch 14, bei welcher die Trommel (60) in dem Tragbereich für die Laufflächenmitte konvex gekrümmt ist.

## Revendications

1. Appareil pour brosser une bande de roulement annulaire munie d'ailes, comportant un bâti (20), un moyen (60) pour supporter la bande de roulement (10), rotatif en direction axiale et monté sur le bâti, un moyen (200) pour étirer la bande de roulement (10), rotatif en direction axiale et dont l'axe de rotation est parallèle à l'axe de rotation du moyen (60) pour supporter la bande de roulement (10), un moyen de roue de brossage de bande de roulement centrale (50) possédant une surface courbe capable d'être amenée en contact avec la bande de roulement pour brosser une surface de bande de roulement venant se mettre en contact avec la carcasse, en procurant des marques laissées par la brosse de profondeur essentiellement égale, un moyen d'entraînement principal (30) pour faire tourner la bande de roulement montée (10) autour d'un ou de plusieurs axes et pour faire tourner la roue de brossage de bande de roulement centrale (50), l'appareil étant caractérisé par une paire de moyens de brossage de bords d'ailes de bande de roulement (80) pour brosser les ailes aux bords de bande de roulement respectifs en procurant des marques laissées par la brosse dont la profondeur est essentiellement égale et qui s'étendent vers l'extérieur jusqu'aux bords de la bande de roulement en direction axiale, ainsi qu'un moyen pour faire tourner le moyen de brossage de bords d'ailes de bande de roulement (90A, 90B).

2. Appareil selon la revendication 1, dans lequel le moyen (60) pour supporter la bande de roulement (10) consiste en un tambour réglable en direction axiale, le tambour étant rotatif autour d'un axe de rotation et étant réglable pour s'adapter à différentes largeurs axiales de bandes de roulement annulaires (10).

3. Appareil selon la revendication 2, dans lequel le moyen (200) pour étirer la bande de roulement est constitué par un rouleau de tension (201) rotatif en direction axiale, monté sur un bras de support de rouleau pivotant (202) fixé au bâti (20), le rouleau (201) possédant un axe de rotation parallèle à l'axe de rotation du tambour (60), le rouleau (201) étant conçu pour que vienne s'y disposer la bande de roulement (10) et étant espacé sur une certaine distance du tambour (60), le bras de support de rouleau (202) étant mobile en pivotement de telle sorte que l'on peut augmenter la distance séparant le tambour (60) et le rouleau (201), améliorant ainsi la force de traction s'exerçant sur la bande de roulement montée (10).

4. Appareil selon la revendication 3, dans lequel la paire de moyens de brossage de bords d'ailes de bande roulement (80) possède une paire de roues de brossage d'ailes (82,83) rotatives en direction axiale, les roues de brossage d'ailes (82,83) étant espacées sur une distance s'approchant de l'écartement des ailes de la bande de roulement et étant positionnées de telle sorte que l'axe de rotation des roues de brossage d'ailes (82,83) est perpendiculaire à l'axe de rotation du tambour (60).

5. Appareil selon la revendication 4, dans lequel le moyen (90A,90B) pour faire tourner le moyen de brossage de bords d'ailes de bande de roulement (80) possède une paire de moyens d'entraînement pour faire tourner les roues de brossage d'ailes (82,83), le moyen (90A,90B) étant tel que la rotation des roues de brossage d'ailes (82,83) s'effectue dans le sens des aiguilles d'une montre pour un roue de brossage d'ailes et dans le sens contraire des aiguilles d'une montre pour l'autre roue de brossage d'ailes, les deux roues de brossage d'ailes tournant de telle sorte que, que les roues de brossage d'ailes viennent se mettre en contact avec les surfaces internes d'ailes de bande de roulement et réalisent un brossage perpendiculaire au plan central de la bande de roulement montée tout en s'écartant de ce dernier.

6. Appareil selon la revendication 3, dans lequel le moyen de brossage d'ailes de bande de roulement (80) est monté à un bras de support de brossage d'ailes, le bras de support étant monté en pivotement sur le bâti et englobant un moyen (81) pour procurer une diminution ou une augmentation de l'écartement axial du moyen de brossage de bords d'ailes de bande de roulement (80).

7. Appareil selon la revendication 1, dans lequel le moyen d'entraînement principal (30) englobe un rapport de démultiplication entre le tambour (60) et la roue de brossage centrale (51) d'environ 1/100, dans lequel le dispositif de brossage tourne à une vitesse d'environ 1500 tours/minute et le tambour tourne à une vitesse d'environ 15 tours/minute.

8. Appareil selon la revendication 7, dans lequel les roues de brossage d'ailes (80) tournent à une vitesse d'environ 2000 tours/minute.

9. Appareil selon la revendication 7, dans lequel un moyen de commande règle la pression de brossage en maintenant une tension de courant constante à partir de chacun des trois moyens d'entraînement, le moyen d'entraînement principal (30) et les entraînements des dispositifs de brossage des deux ailes (90A,90B), le moyen pour régler la pression de brossage sur la bande de roulement (10) étant tel que l'on exerce une pression de brossage relativement constante sur les surfaces de bande de roulement à brosser, le moyen de commande englobant un moyen pour limiter le temps de brossage de la bande de roulement centrale et des ailes.

10. Appareil selon la revendication 9, dans lequel le moyen de commande est réglé à une tension de courant de 30 à 50 A par moteur d'entraînement (30,90A,90B).

11. Appareil selon la revendication 10, dans lequel le moyen de commande réglé à une tension de courant de 40 A par moteur d'entraînement (30,90A,90B).

12. Appareil selon la revendication 9, dans lequel le moyen de commande possède une vis de mise à niveau, la vis de mise à niveau étant rotative de telle sorte qu'un soulèvement de la vis de mise à niveau diminue la pression de brossage, et inversement, un abaissement de la vis de mise à niveau augmente la pression de brossage, la rotation de la vis étant réglée par le moyen de commande.

13. Appareil selon la revendication 1, dans lequel on procure un moyen pour éliminer la matière de bande de roulement brossée, le moyen pour éliminer la matière de bande de roulement brossée englobant un moyen d'élimination à vide de particules de poussière, ainsi que les conduits qui y sont associés.

14. Appareil selon la revendication 1, dans lequel le diamètre du tambour (60) est d'au moins 51 cm.

15. Appareil selon la revendication 14, dans lequel le diamètre du tambour (60) est égal à 76 cm.

16. Appareil selon la revendication 3, dans lequel le rouleau (200) est façonné à l'aide d'un diamètre central à l'intérieur de diamètres terminaux respectifs égaux en direction diamétrale, le diamètre central étant supérieur aux diamètres terminaux.

17. Appareil selon la revendication 4, dans lequel les roues de brossage d'ailes (82,83) sont des roues en toile métallique ayant un diamètre d'environ 7,5 cm.

18. Appareil selon la revendication 14, dans lequel le tambour (60) est muni d'une courbure concave dans la zone de support de bande de roulement centrale.

19. Appareil selon la revendication 14, dans lequel le tambour (60) est muni d'une courbure convexe dans la zone de support de la bande de roulement centrale.
